# FASCICULE DE BREVET EUROPEEN

(11) **EP 2 367 614 B1**
(45) Date de publication et mention de la délivrance du brevet: **11.12.2013**
(21) Numéro de dépôt: 09756761.4
(22) Date de dépôt: 26.11.2009
(51) Int. Cl.: B01F 3/18, B01F 5/26, B01F 7/00, B01F 13/10, B01F 15/00, B01F 15/02, B01F 15/04, B22F 1/00, B22F 3/00, B22F 7/00, C04B 35/626

(54) **INSTALLATION DE DEPOT D'UN MELANGE DE POUDRES POUR LA FORMATION D'UN OBJET A GRADIENTS DE COMPOSITION, ET PROCEDE CORRESPONDANT**
VORRICHTUNG ZUR ABSCHEIDUNG EINER PULVERMISCHUNG ZUR BILDUNG EINES OBJEKTS MIT ZUSAMMENSETZUNGSGRADIENTEN UND DARAUF BEZOGENES VERFAHREN
DEVICE FOR DEPOSITING A POWDER MIXTURE FOR FORMING AN OBJECT WITH COMPOSITION GRADIENTS, AND RELATED METHOD

(30) Priorité: 27.11.2008 FR 0858065
(43) Date de publication de la demande: 28.09.2011
(73) Titulaire: Commissariat à l'Énergie Atomique et aux Énergies Alternatives, 75015 Paris (FR)
(72) Inventeur: GILLIA, Olivier, F-38360 Sassenage (FR); CAILLENS, Basile, F-34090 Montpellier (FR)
(74) Mandataire: Ilgart, Jean-Christophe
(86) Numéro de dépôt international: PCT/EP2009/065932
(87) Numéro de publication internationale: WO 2010/060969

(56) Documents cités:
- DE-A1-102007 050 268
- FR-A- 2 666 077
- FR-A- 2 862 893
- JP-A- 62 277 136
- US-A- 4 443 109
- US-A- 5 913 602
- US-A1- 2004 247 922
- US-B1- 6 357 905

## Description

L'invention se rapporte de façon générale au domaine des objets à gradients de composition, également connus sous la dénomination FMG (de l'anglais « Functionally Graded Materials »). De tels objets sont décrits dans les documents US 5 913 602 A, US 6 357 905 B1 FR 2 862 893 A1.

Ce type d'objet trouve des applications dans un très grand nombre de domaines techniques. A titre d'exemple, il peut s'agir d'un objet constitué à partir d'un mélange d'un matériau céramique et d'un matériau métallique, les proportions de masse des deux matériaux dans le mélange, également dites proportions massiques, étant évolutives au sein du même objet, et fixées en fonction des besoins rencontrés. Par exemple, un objet peut être conçu de manière à évoluer, dans une direction donnée de celui-ci, d'une composition entièrement en matériau céramique à une composition entièrement en matériau métallique, en passant par une zone transitoire de mélange entre ces deux matériaux. On parle alors de gradient de composition dans ladite direction donnée de l'objet concerné.

Pour fabriquer ce type d'objet, il est généralement fait appel aux techniques de dépôt de poudres, dépôt qui est ensuite consolidé par des techniques connues telles que le frittage ou la compaction isostatique à chaud.

De ce fait, l'appareillage utilisé pour fabriquer ce type d'objet à gradients de composition inclut un dispositif de dépôt d'un mélange de poudres, qui est mis en mouvement par rapport à un support sur lequel le mélange est destiné à être déposé, par exemple à l'aide d'un robot.

Néanmoins, la conception des dispositifs de dépôt connus ne permet pas d'obtenir une homogénéité parfaitement satisfaisante des mélanges de poudres qui en sont extraits, impliquant qu'il peut survenir des défauts de conformité entre les objets produits et les objets souhaités. Naturellement, cet inconvénient se traduit également par des problèmes de reproductibilité des objets souhaités.

Pour remédier à ces inconvénients, l'invention a tout d'abord pour objet une installation selon la revendication 1.

L'installation selon l'invention présente avantageusement une conception simple permettant d'obtenir une homogénéité très satisfaisante du mélange de poudres issu du distributeur, limitant voire éradiquant entièrement les défauts de conformité entre les objets produits et les objets souhaités. Ainsi, ce dispositif de dépôt permet une fabrication d'objets fiable, maîtrisée et reproductible, assurant une composition précise en chaque point des objets formés.

Le nombre « n » de réservoirs est choisi en fonction du nombre de poudres différentes souhaité pour la fabrication d'un même objet. Il n'est de ce fait aucunement limité à deux. Par ailleurs, quelque soit le nombre de réservoirs intégrés au sein du dispositif, ceux-ci peuvent naturellement contenir une poudre qui correspond déjà à un mélange de plusieurs poudres données.

De préférence, ledit organe de mélange monté à rotation présente une première surface d'impact des poudres de forme générale conique d'axe correspondant à l'axe de rotation de cet organe.

De préférence, ledit mélangeur comporte une seconde surface d'impact des poudres de forme générale conique, agencée coaxialement et en regard de ladite première surface d'impact des poudres, afin de former entre celles-ci un interstice de passage des poudres, de forme générale conique.

De préférence, ladite première surface d'impact des poudres de forme générale conique présente un ou plusieurs décrochements. Ces décrochements permettent d'améliorer encore davantage le mélange des poudres.

De préférence, ledit organe de mélange est monté à rotation sur une pièce de guidage du mélangeur, équipée d'un ou plusieurs orifices de passage communiquant avec ledit collecteur de mélange de poudres au-dessus duquel ils se trouvent.

De préférence, pour un écoulement efficace par gravité du mélange de poudres à travers la pièce de guidage, il est prévu qu'en tout point de la surface de délimitation de chaque orifice de passage, cette surface de délimitation forme un angle inférieur à 40° avec la verticale, et de préférence inférieur à 30°.

Dans un même but, il est de préférence prévu qu'en tout point de la surface de délimitation dudit collecteur de mélange de poudres, cette surface de délimitation forme un angle inférieur à 40° avec la verticale, et de préférence inférieur à 30°.

Préférentiellement, le dispositif comporte de plus un collecteur des poudres (A1,..,An) placé sous lesdits moyens de distribution, entre ces derniers et ledit mélangeur. A cet égard, toujours dans le même but d'obtenir un écoulement efficace par gravité des poudres au sein de ce collecteur, il est de préférence prévu qu'en tout point de la surface de délimitation dudit collecteur des poudres (A1,..,An), cette surface de délimitation forme un angle inférieur à 40° avec la verticale, et de préférence inférieur à 30°.

De préférence, chacun desdits moyens de distribution prend la forme d'un dispositif d'acheminement de poudre par vibrations d'un élément support de poudre. Ainsi, il est possible de maîtriser parfaitement le débit de masse de poudre s'échappant de chaque moyen de distribution, en fonction de la fréquence et de l'amplitude des vibrations du dispositif d'acheminement. De ce fait, la composition de l'objet obtenu est également parfaitement maîtrisée.

De préférence, ladite unité de commande prend en compte, pour commander chacun desdits moyens de distribution sur une période T :
- l'évolution des proportions de masse des poudres A1,..,An au sein d'un mélange de poudres à déposer, sur ladite période T ;
- des valeurs représentatives de la masse volumique du mélange de poudres après dépôt, en fonction des proportions de masse des poudres A1,..,An dans ce mélange ; et
- le temps de latence (tl) associé au dispositif de dépôt, correspondant au temps s'écoulant entre l'instant où des commandes sont transmises aux moyens de distribution de poudre afin d'obtenir un mélange de poudres ayant des proportions de masse données, et l'instant auquel ce mélange de poudres est déposé.

De préférence, la période T correspond à une durée pour la formation d'une couche entière de mélange de poudres, voire à une durée pour la formation d'une pluralité de couches superposées.

L'évolution des proportions de masse des poudres A1,..,An au sein d'un mélange de poudres à déposer, sur la période T, est préalablement déterminée en fonction de la composition souhaitée en chaque point de l'objet à fabriquer. Cette évolution peut indifféremment prendre la forme d'une courbe continue en fonction du temps, de valeurs pour des instants donnés, ou de toute autre forme.

De préférence, pour s'assurer que la couche de mélange de poudres déposée dispose d'une épaisseur sensiblement constante, notamment en vue de la superposition de plusieurs couches, les débits de masse de chaque poudre, pour chaque instant t de la période T, sont effectivement déterminés à partir des proportions de masse souhaitées pour le mélange à cet instant t, et de la valeur représentatives de la masse volumique de ce mélange après dépôt. A cet égard, il est noté que ces valeurs représentatives peuvent être déterminées préalablement, par exemple par étalonnage. Il peut s'agir de la masse volumique elle-même, de la densité, ou encore de toute autre valeur jugée représentative.

De même, comme cela ressort de ce qui précède, pour tenir compte du temps de traversée des poudres au sein du dispositif, la détermination des débits de masse à appliquer à chaque instant t de la période T prend en compte le temps de latence précité. Ce dernier correspond en d'autres termes au retard que subissent les poudres entre les ordres de distribution qui leur sont associés, et leur dépôt effectif sur le support, après leur sortie du distributeur.

Ensuite, les débits de masse des poudres déterminés de la manière exposée ci-dessus sont transformés en des commandes des moyens de distribution de ces poudres, prenant par exemple la forme de signaux électriques alimentant ces moyens, le lien entre les débits et les commandes étant également préalablement déterminés, par exemple par étalonnage.

De préférence, ladite unité de commande prend en compte, pour commander lesdits moyens de mise en mouvement du dispositif de dépôt, sur une période T, l'évolution de la position (x,y) à adopter pour le distributeur de mélange de poudres, sur la période T.

Les coordonnées x et y de la position peuvent correspondre à des coordonnées dans un repère plan associé au support sur lequel la couche de mélange de poudres doit être déposée. Dans le cas où l'objet serait destiné à être fabriqué par superposition de couches, les coordonnées pourraient de plus comprendre une variable z liée à la hauteur du distributeur par rapport au support sur lequel les couches sont déposées.

Naturellement, il est fait en sorte que la commande des moyens de mise en mouvement du dispositif et les commandes des moyens de distribution soient calées les unes par rapport aux autres temporellement.

L'invention a également pour objet un procédé de fabrication d'un objet à gradients de composition à l'aide de l'installation décrite ci-dessus, dans lequel l'objet à gradients de composition est réalisé à partir de la formation d'au moins une couche de mélange de poudres déposée sur un support, par mise en mouvement dudit distributeur de mélange de poudres par rapport audit support.

De préférence, pour la réalisation de ladite couche de mélange de poudres, ledit distributeur de mélange de poudres est mis en mouvement de manière à réaliser un balayage de la surface du support sur lequel ladite couche doit être déposée, la commande d'au moins l'un des moyens de distribution variant durant ledit balayage. Cela permet avantageusement d'obtenir un ou plusieurs gradients de composition dans le plan de l'épaisseur de la couche déposée, ces gradients pouvant donc s'ajouter à ceux susceptibles d'être obtenus par la superposition de plusieurs couches de compositions différentes.

D'autres avantages et caractéristiques de l'invention apparaîtront dans la description détaillée non limitative ci-dessous.

Cette description sera faite au regard des dessins annexés parmi lesquels ;
- la figure 1 représente une vue en coupe d'un dispositif de dépôt de mélange de poudres, selon un mode de réalisation préféré de la présente invention ;
- la figure 2 représente une vue en perspective d'une partie du dispositif montré sur la figure 1 ;
- la figure 3 représente une vue en perspective de l'organe de mélange appartenant au dispositif montré sur les figures 1 et 2 ;
- la figure 3a représente une vue en perspective de la pièce de guidage du mélangeur de poudres appartenant au dispositif montré sur les figures 1 et 2 ;
- la figure 3b représente une vue en perspective du collecteur de mélange de poudres appartenant au dispositif montré sur les figures 1 et 2 ;
- la figure 4 représente une vue en perspective d'un support de poudre appartenant à un dispositif d'acheminement de poudre par vibrations faisant partie intégrante du dispositif montré sur les figures 1 et 2 ;
- la figure 5 est une vue schématique illustrant le fonctionnement du dispositif d'acheminement de poudre par vibrations ;
- la figure 6 représente une vue partielle en perspective d'une installation de dépôt d'un mélange de poudres, intégrant le dispositif de dépôt montré sur les figures précédentes ;
- la figure 7 représente schématiquement le fonctionnement de l'unité de commande équipant l'installation de la figure précédente ;
- la figure 8 illustre schématiquement le balayage effectué par le distributeur pour la réalisation d'une couche de mélange de poudres, effectuée lors de la mise en oeuvre d'un procédé de fabrication d'un objet à gradients de composition selon un mode de réalisation préféré de la présente invention ;
- la figure 8a est similaire à la figure 8, et représente un balayage selon une alternative de réalisation ;
- la figure 9 illustre schématiquement un procédé selon un mode de réalisation préféré de la présente invention, dans lequel l'objet à gradients de composition désiré est réalisé à partir d'un empilement de plusieurs couches de mélange de poudres ;
- la figure 9a est similaire à la figure 9, et représente une alternative de réalisation ; et
- les figures 10a à 10c sont des vues en coupe d'objets à gradients de composition susceptibles d'être obtenus à l'aide de la présente invention.

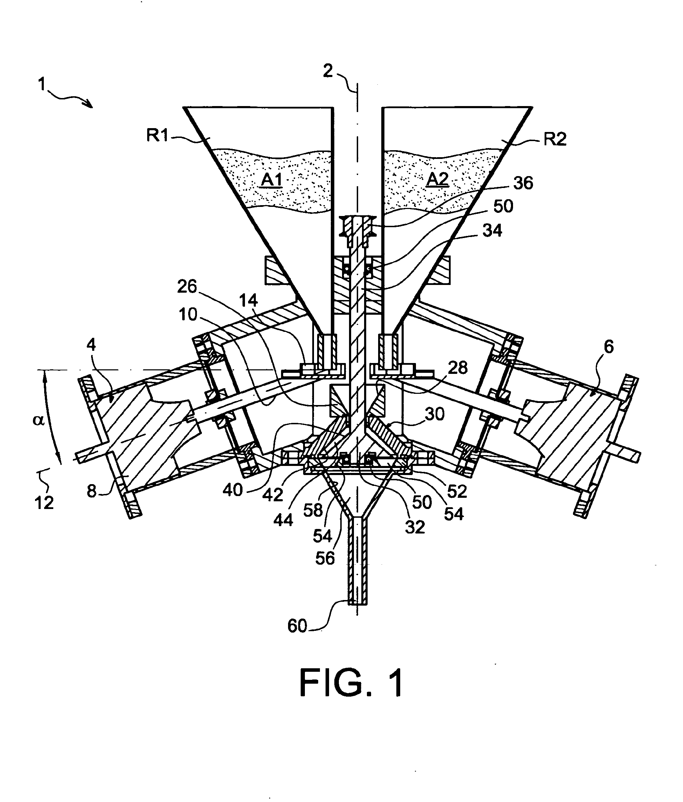

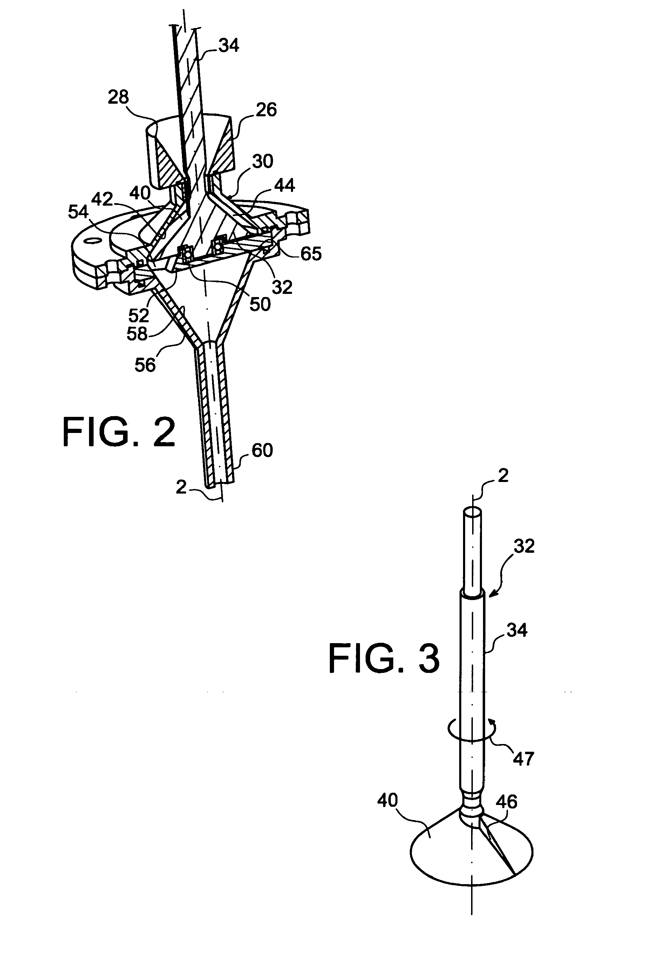

En référence aux figures 1 et 2, on peut voir un dispositif de dépôt de mélange de poudre 1 selon un mode de réalisation préféré de la présente invention. Ce dispositif 1, également dénommé tête de dépôt, présente une succession d'éléments disposés de façon successive dans la direction verticale, correspondant à la direction de l'axe 2 de ce dispositif, qui est de préférence prévu pour être sensiblement orthogonal au support sur lequel le mélange de poudres est destiné à être déposé, lors de la fabrication d'un objet. Cela permet en particulier, comme détaillé ci-après, de faire en sorte que les poudres traversent le dispositif 1 essentiellement par gravité, avant d'être éjectées de celui-ci.

Plusieurs réservoirs de poudres sont agencés en partie supérieure de la tête 1. Plus précisément, dans le mode de réalisation préféré représenté, il est prévu deux réservoirs distincts, à savoir les réservoirs R1 et R2 agencés autour de l'axe 2. A titre indicatif, il est noté qu'en vue de dessus, à savoir prise selon la direction de l'axe 2, les réservoirs sont de préférence disposés de manière excentrée par rapport à cet axe, ce dernier constituant un centre de symétrie pour l'ensemble des réservoirs.

Le réservoir R1 est rempli d'une poudre A1, tandis que le réservoir R2 est rempli d'une poudre A2 de composition différente de celle de A1.

A titre d'exemple indicatif, la poudre A1 est un matériau métallique, par exemple du type connu sous la marque Inconel 600 commercialisée par la société Special Metals, correspondant à un alliage complexe de nickel, de chrome et de fer, contenant de petites quantités de carbone, de silicium et de manganèse et présentant à la fois une grande résistance à la corrosion et d'excellentes caractéristiques mécaniques. Sa granulométrie peut être de l'ordre de 50 à 120 µm. Toujours à titre d'exemple, la poudre A2 est un matériau céramique, par exemple du type oxyde de zirconium ZrO₂, éventuellement pré-mélangée avec du trioxyde d'yttrium Y₂O₃. Sa granulométrie peut être de l'ordre de 1 à 120 µm.

Dans le mode de réalisation représenté, seuls deux réservoirs ont donc été prévus au sein du dispositif de dépôt, chacun contenant une poudre différente. Néanmoins, en fonction de l'objet désiré, il se peut que le nombre de poudres différentes nécessaires à l'obtention de cet objet soit supérieur à deux, par exemple trois, quatre, ou plus encore. Dans un tel cas, le dispositif de dépôt selon l'invention est adapté de manière à intégrer autant de réservoirs que nécessaire, de préférence toujours répartis autour de l'axe 2. De même, la commande de ce dispositif, qui sera détaillée ci-après, est naturellement adaptée en fonction du nombre de poudres différentes mises en oeuvre.

Chaque réservoir présente de préférence une ouverture supérieure pour le chargement des poudres dans le dispositif, ainsi qu'un orifice de sortie situé à l'opposé de l'ouverture selon la direction verticale. Par ailleurs, en tout point de la surface de délimitation de chaque réservoir, cette surface de délimitation forme un angle de préférence inférieur à 40° avec la verticale, et encore plus préférentiellement inférieur à 30° par rapport à cette direction. Cela permet un bon écoulement de la poudre, par gravité uniquement, du haut vers le bas du réservoir en direction de l'orifice de sortie.

Chaque réservoir R1, R2 est équipé d'un moyen de distribution de poudre coopérant avec l'orifice de sortie de son réservoir associé, en dessous duquel il est agencé.

Dans le mode de réalisation préféré représenté, chaque moyen de distribution prend la forme d'un dispositif d'acheminement de poudre par vibrations d'un élément support de poudre, ce type de dispositif d'acheminement étant connu en soi, par exemple du type décrit dans le document FR 2 666 077 A.

Ainsi, un dispositif d'acheminement 4 est couplé au réservoir R1, tandis qu'un dispositif d'acheminement 6 est couplé au réservoir R2. D'une manière générale, chaque dispositif 4, 6 présente un générateur de vibrations 8 entrainant une tige 10 dans un mouvement de va-et-vient selon l'axe 12 de cette tige, incliné d'un angle α selon l'horizontale, comme montré sur la figure 1 pour le dispositif 4. L'angle α peut être de l'ordre de 20 à 40°.

L'extrémité opposée de la tige 10 porte fixement un élément support de poudre 14, également dénommé plaquette de distribution, de préférence position horizontalement, ou légèrement incliné par rapport à l'horizontale. Ainsi, lorsque le générateur de vibrations 8 est excité, le support 14 est animé d'un mouvement rapide de va-et-vient dans une direction correspondant à celle de l'axe 12, selon une amplitude et une fréquence données, dépendant du signal de commande appliqué à ce générateur de vibrations 8.

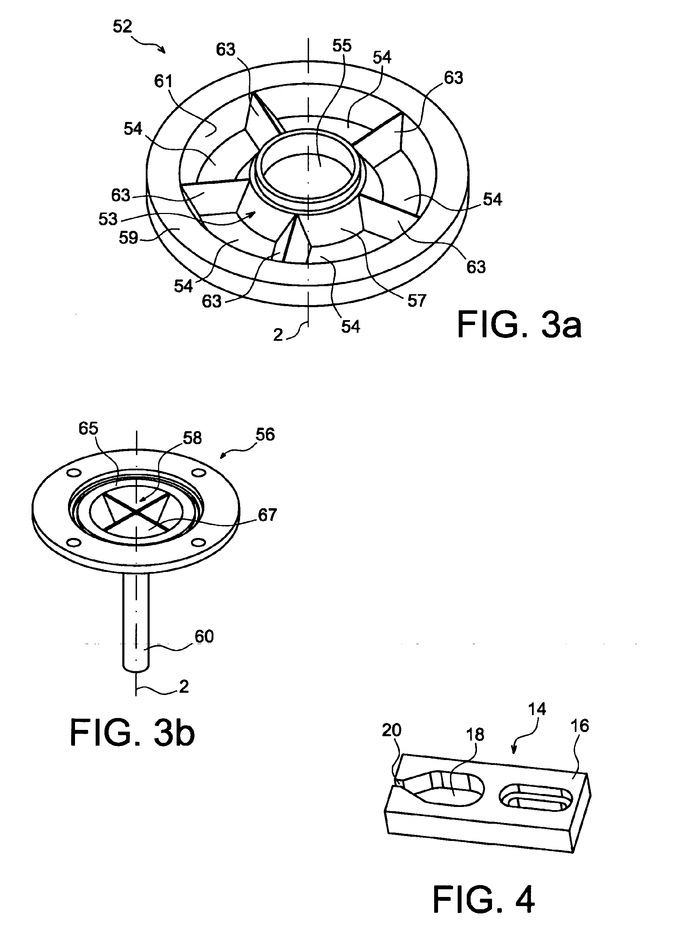

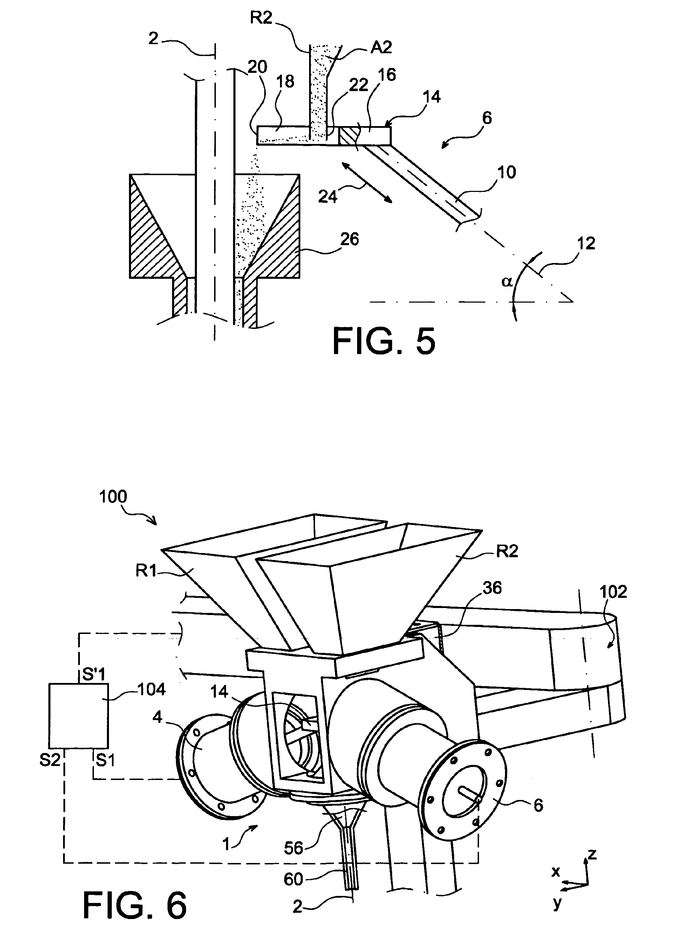

Sur la figure 5, il a été représenté une partie du dispositif d'acheminement 6, de manière à illustrer son fonctionnement. Comme on peut le voir sur la figure 4, le support de poudre 14 comprend une portion de fixation 16 destinée à son raccordement sur la tige 10, et une portion opposée de distribution de poudre 18. Cette dernière portion 18 forme un réceptacle de poudre avec une entaille 20 pour l'évacuation de celle-ci, l'orifice de sortie 22 du réservoir R2 étant situé en regard et à faible distance du fond de ce réceptacle 18, comme montré sur la figure 5. L'écartement entre l'orifice de sortie 22 et le fond du réceptacle 18 peut être ajusté en fonction des besoins rencontrés, par exemple fixé à environ 1 ou 2 mm.

Lorsque le support 14 vibre, tel que cela a été schématisé par la double flèche 24 orientée selon la direction du mouvement de va-et-vient qu'il subit, la poudre A2, issue de l'orifice 22 et se logeant dans le fond du réceptacle 18, se déplace progressivement vers l'entaille 20, avant de tomber par gravité vers un collecteur de poudres 26 qui sera décrit ci-après.

En fonction de l'amplitude et de la fréquence de vibrations du support 14, le débit de masse de poudre A2, s'échappant par l'entaille 20 et tombant uniquement par gravité dans le collecteur 26, peut être régulé de manière très précise. A cet égard, il est préalablement établi une corrélation entre la commande appliquée au dispositif d'acheminement 6, par exemple un signal électrique, et le débit de masse de poudre A2 s'échappant du support 20, assimilable au débit s'échappant du réservoir R2. Cette corrélation, prenant par exemple la forme d'une table de correspondances de valeurs, est préférentiellement obtenue par une opération d'étalonnage effectuée avec le dispositif 1, avant l'utilisation de celui-ci pour la fabrication d'un objet. Une telle corrélation est donc établie pour chaque poudre destinée à être utilisée. D'ailleurs, si seul le fonctionnement du dispositif 6 a été décrit, il doit être compris que le fonctionnement du dispositif 4 est identique ou similaire, étant donné qu'il présente une même conception.

Pour des raisons d'encombrement, les dispositifs d'acheminement par vibrations 4, 6 s'étendent, à partir de leur support 14, sensiblement radialement vers l'extérieur par rapport à l'axe 2.

De retour à la figure 1 en combinaison avec la figure 2, la tête de dépôt 1 présente donc le collecteur de poudres 26 en dessous des deux supports 14, de sorte que les poudres A1 et A2 s'échappant de leurs entailles respectives tombent par gravité dans ce collecteur.

Celui-ci prend la forme d'un convergent, avec une surface de délimitation 28 sensiblement conique d'axe 2. Toujours pour faciliter l'écoulement des poudres A1, A2 par gravité au sein de ce convergent 26, en tout point de la surface de délimitation 28, cette surface forme un angle de préférence inférieur à 40° avec la verticale, et encore plus préférentiellement inférieur à 30° par rapport à cette direction.

Le collecteur 26 débouche vers le bas dans un mélangeur de poudres 30, qui comprend un organe de mélange 32 monté à rotation selon l'axe 2, sur lequel il est centré. Cet organe de mélange 32 présente une tige 34 traversant le collecteur 26 en direction de la partie supérieure de la tête 1, l'extrémité supérieure de cette tige étant couplée à des moyens 36 de mise en rotation selon l'axe 2, par exemple un moteur équipé d'une courroie de transmission.

L'extrémité inférieure de cette tige 34 est reliée à une partie plus massive de l'organe de mélange 32, formant une première surface d'impact des poudres 40, de forme générale conique d'axe 2 s'élargissant vers le bas. Par ailleurs, le mélangeur 30 comporte également une partie fixe extérieure entourant l'organe de mélange rotatif 32. Cette partie fixe présente une seconde surface d'impact des poudres 42, de forme générale conique d'axe 2 s'élargissant vers le bas, et agencée en regard de la première surface d'impact 40 de manière à former entre celles-ci un interstice 44 de passage des poudres, également de forme générale conique.

Comme le montre la figure 3, la surface d'impact des poudres 40 présente un ou plusieurs décrochements 46, s'étendant de préférence le long d'une génératrice de la surface conique, par exemple dans un plan vertical passant par l'axe 2. Si un seul décrochement 46 est visible sur la figure 3, il est noté que plusieurs décrochements sont préférentiellement prévus, répartis angulairement de manière régulière sur 360° autour de l'axe 2, pour des raisons de comportement dynamique de l'organe rotatif 32.

L'interstice 44 sensiblement conique formé entre les deux surfaces d'impact des poudres 40, 42 est agencé pour permettre à la poudre d'impacter à plusieurs reprises la surface 40 de l'organe 32, et/ou la surface 42. Il est donc avantageux que l'interstice présente une épaisseur comprise entre 1 mm et 1 cm, l'épaisseur étant considérée selon une direction orthogonale à l'axe du cône, qui correspond à l'axe 2. Il est noté que l'épaisseur de l'interstice 44 varie en raison de la présence des décrochements 46, cette épaisseur variant par exemple entre 3 et 7 mm.

Ainsi, les poudres A1 et A2, tombant par gravité dans l'espace annulaire formé par l'orifice de sortie du collecteur 26 et la tige 34 traversant cet orifice, s'introduisent dans l'interstice 44 dans lequel elles sont intimement mélangées dès leur premier impact avec la surface conique 40 à décrochements 46. A cet égard, la vitesse de rotation de l'organe 32 est fixée à une valeur permettant par exemple d'obtenir qu'une même particule de poudre soit impactée environ dix fois par la surface rotative 40, durant son séjour dans le mélangeur, cela se traduisant par exemple par une vitesse de rotation de l'ordre de 3000 trs/min appliquée par les moyens 36. Avantageusement, il est prévu qu'en fonctionnement, l'organe de rotation 32 tourne dans un sens opposé à celui vers lequel les décrochements 46 sont orientés, de façon à éviter une accumulation de matière au niveau de ces décrochements 46. Dans l'exemple montré sur la figure 3, l'organe de rotation 32 tourne donc dans le sens trigonométrique représenté par la flèche 47. Ainsi, la nature et le sens des décrochements orientent préférentiellement le sens de la rotation de l'organe 32.

Pour le guidage en rotation de l'organe 32, il est par exemple prévu un palier à roulements 50 au niveau de la partie supérieure de la tige 34, et un autre palier à roulements 50 placé entre l'extrémité inférieure de l'organe 32 et une pièce de guidage 52 en forme de plaque. Cette pièce 52, placée horizontalement sous l'interstice 44 de forme générale conique s'élargissant vers le bas, est équipée d'un ou plusieurs orifices de passage 54 communiquant avec un collecteur de mélange de poudres 56 au-dessus duquel il se trouve.

Chaque orifice 54, destiné à être traversé par le mélange de poudres sous l'effet de la gravité, est tel qu'en tout point de sa surface de délimitation, cette surface forme un angle inférieur à 40° avec la verticale, et encore plus préférentiellement inférieur à 30° avec cette direction, toujours dans le but de favoriser un bon écoulement des poudres au sein de la tête de dépôt 1. Ces orifices 54, répartis autour de l'axe 2, ont une forme globalement convergente, comme le montre le mieux la figure 3a montrant un exemple de réalisation de la plaque de guidage 52. Sur cette figure 3a, on peut apercevoir que la pièce 52 centrée sur l'axe 2 comprend globalement un moyeu 53 présentant un logement central 55 pour la réception du palier à roulement, la surface extérieure inclinée 57 du moyeu 53 formant la surface radialement interne des orifices 54. Une virole extérieure 59 est disposée concentriquement au moyeu 53, sa surface intérieure inclinée 61 formant la surface radialement externe des orifices 54. D'autre part, des bras radiaux 63 raccordent le moyeu 53 à la virole extérieure 59. Chaque bras 63 délimite deux orifices 54 de part et d'autre de celui-ci, toujours à l'aide de surfaces inclinées répondant à la définition ci-dessus en termes d'angle par rapport à la verticale. La partie supérieure de chaque bras radial 63 prend de préférence la forme d'une arête la plus fine possible, afin de limiter les risques d'accumulation de poudres sur ces arêtes.

De retour à la figure 2, on peut voir que tout comme les orifices 54 traversant la pièce 52, le collecteur de mélange de poudres 56 situé en dessous de cette pièce 52 présente une forme globalement convergente. Ici encore, en tout point de la surface de délimitation 58 de ce collecteur 56, cette surface forme un angle inférieur à 40° avec la verticale, et encore plus préférentiellement inférieur à 30°. Le collecteur 56, centré sur l'axe 2, présente une partie supérieure formant siège 65 sur lequel repose la virole extérieure de la pièce de guidage 52. Il est de dimension adaptée pour pouvoir collecter le mélange de poudres s'échappant de chacun des orifices 54 prévus sur la pièce 52. Comme montré sur la figure 3b, il peut en outre être prévu un moyen 67 sous la forme de deux plaques en inox entrecroisée à 90°, venant s'insérer dans le collecteur 56, ce moyen 67 permettant de casser l'effet de tourbillon adopté par le mélange de poudres en sortie des orifices 54.

Situé en dessous dans le prolongement du collecteur 56, se trouve un distributeur de mélange de poudres 60 par lequel le mélange est extrait du dispositif 1, toujours par simple gravité. Ce distributeur prend la forme d'un canal droit de faible diamètre, par exemple compris entre 2 et 5 mm, centré sur l'axe 2.

Il est noté que le dispositif est prévu pour être assemblé à partir d'éléments métalliques, par exemple en inox 316.

Par conséquent, comme cela ressort de ce qui précède, les poudres A1, A2 traversent successivement les réservoirs R1, R2, les supports 14, 14 des dispositifs d'acheminement par vibrations, le collecteur 26, l'interstice 44, les orifices de passage 54 de la pièce de guidage 52, le collecteur 56 et le distributeur 60, avant de s'échapper de la tête 1 pour former une couche de mélange de poudres. A ce titre, il est noté que l'expression « mélange de poudres » doit être interprétée de façon large, à savoir désignant à la fois les compositions sortant de la tête de dépôt 1 et comprenant de la poudre A1 et de la poudre A2, et les compositions sortant de cette tête 1 et comprenant que de la poudre A1, ou que de la poudre A2.

Enfin, il est indiqué que chaque surface du dispositif 1 susceptible d'être en contact avec la poudre est prévue avec une faible rugosité, en présentant par exemple un écart moyen Ra de l'ordre de 0,4 µm.

En référence à présent à la figure 6, on peut voir une installation de dépôt de mélange de poudres 100, intégrant une tête de dépôt 1 telle que décrite ci-dessus. La tête 1 est montée sur un dispositif de mise en mouvement dans l'espace 102, de préférence du type robot. Ce robot 102 est de préférence conçu pour déplacer la tête en tout point d'un repère direct orthonormé x,y,z, dont la coordonnée z correspond à la direction de la hauteur de la tête 1, donc parallèle à l'axe 2.

L'installation 100 comprend une unité de commande 104 permettant de commander, par une sortie S'1, le robot 102, par une sortie S1, le moyen de distribution 4 associé à la poudre A1, et par une sortie S2, le moyen de distribution 6 associé à la poudre A2. De plus, cette unité de commande 104, comprenant des éléments classiques du type calculateur, convertisseur, etc., peut également gérer la commande des moyens 36 de mise en rotation de l'organe de mélange 32, même si cela n'a pas été représenté.

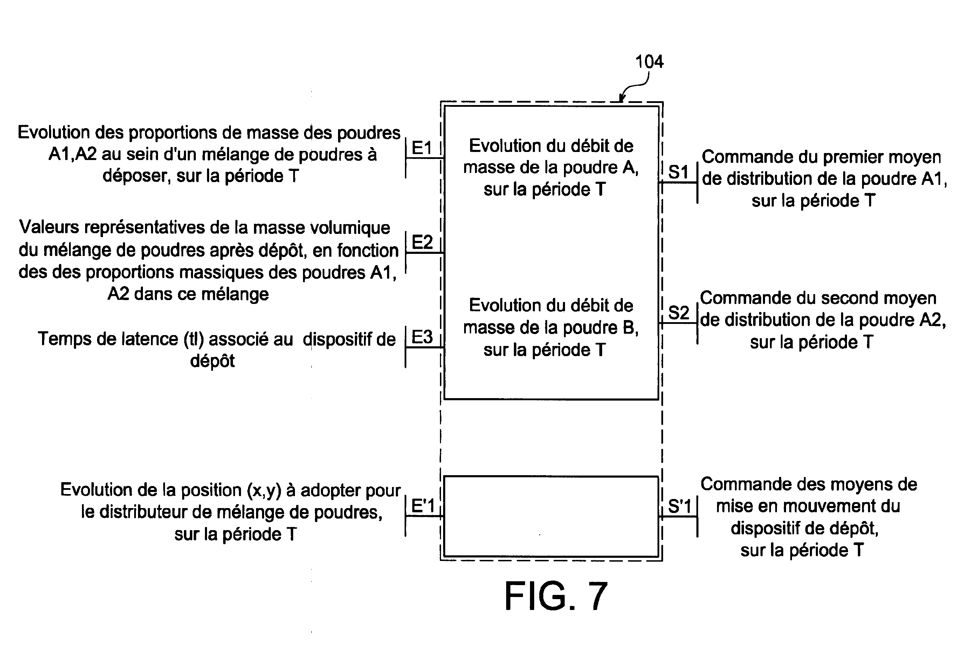

La figure 7 représente une vue schématique d'un exemple d'unité de commande 104. Une première partie est dédiée à la génération de commandes des moyens de distribution de poudre, tandis qu'une seconde partie est dédiée à la commande du robot 102.

Pour la première partie, l'unité 104 reçoit plusieurs informations par le biais d'entrées E1, E2, E3. L'entrée E1 concerne l'évolution des proportions de masse des poudres A1, A2 au sein du mélange de poudres à déposer, cette évolution étant déterminée sur une période T que l'on considérera par la suite comme la période permettant de déposer une couche entière de mélange de poudres. Bien évidemment, cette évolution des proportions de masse du mélange est déterminée en fonction de la composition souhaitée pour la couche à déposer, variable en tout point de celle-ci, ou constante dans certains cas particuliers.

L'entrée E2 concerne des valeurs représentatives de la masse volumique du mélange de poudres après dépôt, en fonction des proportions de masse des poudres A1, A2 dans ce mélange. Ces valeurs représentatives peuvent être déterminées préalablement, de préférence par étalonnage effectué avec cette même installation. Il peut s'agir de la masse volumique elle-même ou de la densité.

L'entrée E3 correspond au temps de latence (tl) associé au dispositif de dépôt 1, correspondant au temps s'écoulant entre l'instant où des commandes sont transmises aux moyens de distribution de poudre 4, 6 afin d'obtenir un mélange de poudres ayant des proportions de masse données, et l'instant auquel ce mélange de poudres est déposé après sa sortie du distributeur 60. Ce temps de latence peut également être déterminé par étalonnage effectué avec cette même installation.

L'unité 104 commence tout d'abord par déterminer l'évolution des débits de masse des poudres A1, A2 à adopter, sur la période T. De façon générale, pour chaque instant t de la période T, l'entrée E1 permet de fixer le rapport entre les deux débits, l'entrée E2 permet de fixer la valeur de chacun de ces deux débits tout en respectant le rapport ordonné, et l'entrée E3 permet d'appliquer une avance temporelle aux ordres de débits afin de compenser le retard existant entre l'instant où l'ordre de débit est donné, et l'instant où la poudre est déposée après avoir été extraite du distributeur 60.

Il est noté que la prise en compte de l'entrée E2 permet de fixer les débits à des valeurs qui assurent la formation d'une couche d'épaisseur sensiblement constante, quelle que soit l'évolution de la composition du mélange de poudres au sein de cette couche. Cela s'avère particulièrement avantageux dans le cas où l'objet désiré nécessiterait la superposition de plusieurs couches, impliquant qu'une couche donnée quelconque doive présenter une surface supérieure sensiblement plane et horizontale, afin de former un support convenable pour la couche directement supérieure de l'empilement.

Ensuite, à partir de l'évolution requise des débits sur la période T, l'unité 104 génère en sortie S1 une commande du premier moyen de distribution 4 de la poudre A1, ainsi qu'une commande du second moyen de distribution 6 de la poudre A2 en sortie S2. Pour ce faire, il est préférentiellement utilisé les corrélations décrites ci-dessus, préalablement établies entre les commandes appliquées aux dispositifs d'acheminement 4, 6, et les débits de masse des poudres A1, A2 s'échappant du support 20.

La seconde partie de l'unité 104, dédiée à la commande du robot 102, reçoit d'une entrée E'1 des informations concernant l'évolution de la position (x,y) à adopter pour le distributeur 60 de la tête 1, et ce sur la période T. Ces informations sont préalablement déterminées, et traduisent globalement le trajet que l'on souhaite faire suivre au distributeur 60 pour aboutir à la couche de mélange de poudres, ainsi que la vitesse, éventuellement évolutive mais préférentiellement constante sur la période T, à laquelle on souhaite que ce trajet soit effectué. L'unité 104, à partir de E'1, génère en sortie S'1 la commande des moyens de mise en mouvement de la tête de dépôt 1, assurant son déplacement dans le plan x,y.

Pour aboutir à la couche souhaitée, il est bien évidemment fait en sorte que la commande des moyens de mise en mouvement du dispositif et les commandes des moyens de distribution soient calées les unes par rapport aux autres temporellement.

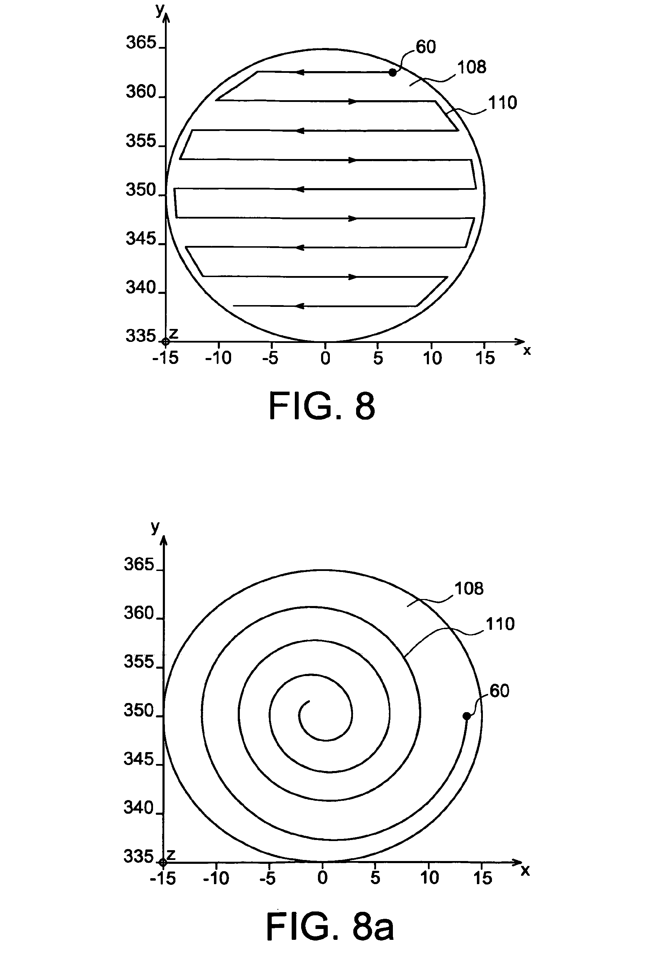

En référence à présent à la figure 8, on peut voir que le repère x,y,z peut être associé au support ou substrat 108 sur lequel la couche est censée être déposée. Un exemple de trajet 110 du distributeur 60 est représenté, dans le cas particulier d'une couche en forme générale de disque. Ce trajet correspond à un balayage de la surface du support 108 destinée à être épousée par la couche, et prend par exemple la forme d'une pluralité d'allers-retours selon la direction x, avec un décalage selon la direction y entre chaque aller et chaque retour. Au cours de ce trajet, la composition du mélange de poudres peut bien entendu être évolutive, notamment en vue de la formation d'un ou plusieurs gradients de composition dans le plan x,y de la couche obtenue. Une alternative de réalisation est montrée sur la figure 8a, sur laquelle le trajet 110a est en forme de spirale.

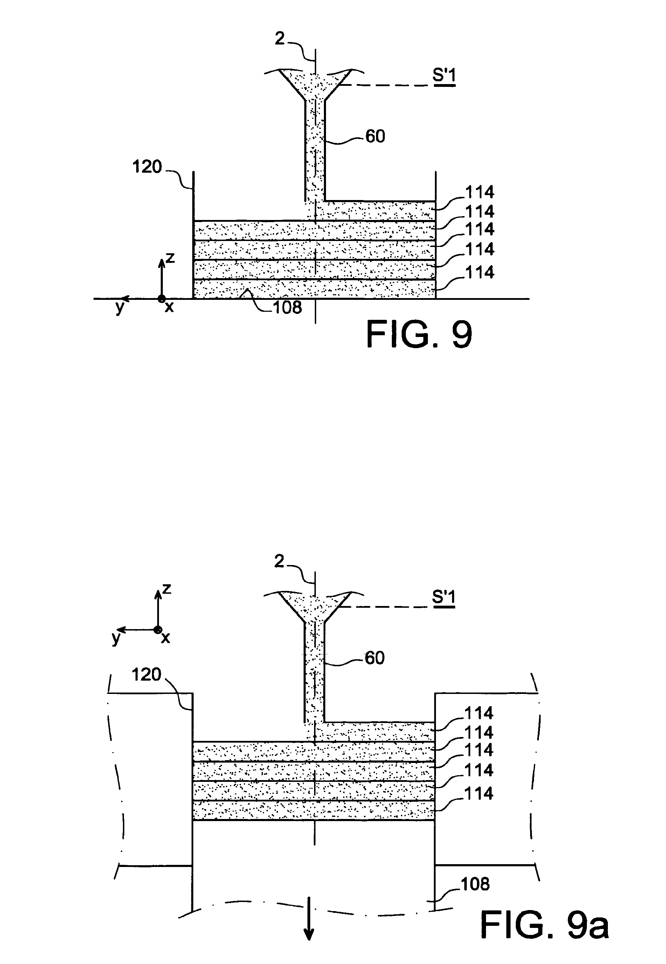

Enfin, il est noté que le procédé peut s'étendre à la formation d'un objet par empilement de plusieurs couches 114 selon la direction z, comme le montre la figure 9. Dans ce cas, les commandes S1, S2 et S'1 peuvent être prévues sur une période T correspondant à la durée nécessaire pour réaliser toutes ces couches. Cela peut notamment impliquer que la commande S'1 gère également l'altitude z du distributeur 60 par rapport à la surface du support 108, de préférence pour conserver un écartement toujours sensiblement identique entre l'extrémité basse du distributeur 60 et la couche préalablement déposée.

Sur la figure 9, on peut voir que le support 108 fait partie intégrante d'un conteneur 120, dont il constitue le fond. Les différentes couches 114 sont déposées dans ce conteneur 120, les unes après les autres, afin de former l'empilement désiré susceptible de présenter un ou plusieurs gradients de composition selon la direction z.

Une alternative de réalisation consiste à prévoir que le fond 108 est mobile selon la direction z et le distributeur 60 fixe dans cette même direction, comme schématisé sur la figure 9a. Dans ce cas de figure, le fond 108 prend alors la forme d'un piston qui se déplace vers le bas après la réalisation de chaque couche, selon une distance de préférence proche ou identique à l'épaisseur des couches.

A titre indicatif, il est noté que chaque couche 114 peut présenter une épaisseur de l'ordre de 0,25 mm, et l'empilement final une épaisseur de l'ordre de 27 mm.

En outre, une fois le dépôt de mélange de poudres terminé, il est procédé à sa consolidation selon une technique connue quelconque, permettant d'obtenir l'objet à gradients de composition. Dans l'exemple montré sur la figure 9, l'empilement est ensuite compacté à froid afin de rendre l'ensemble manipulable, c'est-à-dire sans risquer de désordonner les poudres de l'empilement. Ensuite, le procédé de fabrication est poursuivi en densifiant l'ensemble par une opération de compression isostatique à chaud, également dénommée CIC, bien que d'autres techniques pourraient être employées, sans sortir du cadre de l'invention. Pour la réalisation de cette compression isostatique à chaud, l'empilement compacté est d'abord dégazé puis fermé de manière étanche par le conteneur 120 dans lequel il se trouve. Ensuite, la densification est obtenue en plaçant l'ensemble dans une enceinte à une température d'environ 1325°C et une pression d'environ 1400 bars, afin d'obtenir la compression isostatique à chaud.

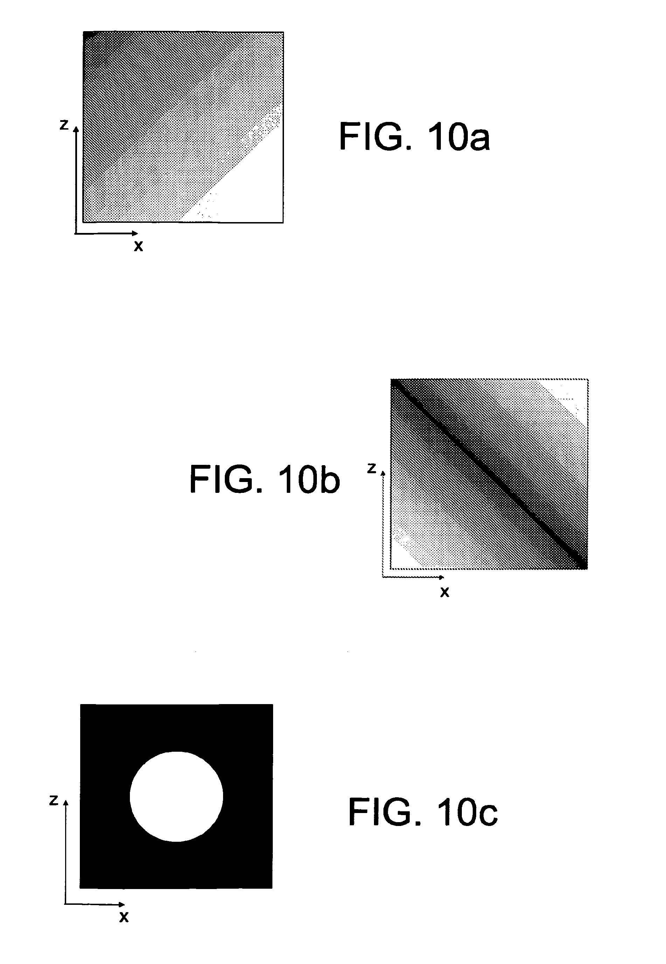

Comme mentionné ci-dessus, l'objet en trois dimensions obtenu peut présenter un ou plusieurs gradients de composition dans toute direction du repère x, y, z. A cet égard, les figures 10a à 10c montrent, en coupe selon des plans x,z, des objets susceptibles d'être obtenus avec la présente invention.

Sur ces figures, plus la couleur est sombre, plus la proportion de masse de poudre A1 dans le mélange est importante, et plus la couleur est claire, plus la proportion de masse de poudre A2 dans le mélange est importante. Les figures 10a et 10b montrent donc des réalisations à différents gradients de composition progressifs dans le plan x,z, tandis que la tache blanche de la figure 10c peut correspondre à une sphère intégrée au sein de l'enveloppe noire réalisée dans un autre matériau que celui de la sphère.

Plusieurs applications sont possibles pour les objets à gradients de composition ainsi réalisés. Parmi celles-ci, on compte des pièces pour réacteurs d'aéronef, échangeurs thermiques, notamment dans les réacteurs nucléaires, vapo-réformeurs, réacteurs pour biomasse, piles à combustible, électrolyseurs, etc.

## Revendications

1. Installation (100) de dépôt d'un mélange de poudres pour la formation d'un objet à gradients de composition, comprenant un dispositif (1) de dépôt d'un mélange de poudres monté sur des moyens de mise en mouvement dans l'espace (102), ladite installation comprenant une unité de commande (104) permettant de commander lesdits moyens de mise en mouvement (102),
**caractérisée en ce que** ledit dispositif (1) comporte les éléments suivants :
- une pluralité de réservoirs (R1,..,Rn) respectivement destinés à contenir des poudres différentes (A1,..,An) ;
- un mélangeur de poudres (30) placé sous lesdits réservoirs (R1,..,Rn), ledit mélangeur comportant un organe de mélange (32) monté à rotation et destiné à être impacté par les poudres (A1,..,An) provenant des réservoirs ;
- une pluralité de moyens (4, 6) de distribution de poudre coopérant respectivement avec les réservoirs (R1,..,Rn), et chacun conçu pour réguler le débit de masse de la poudre s'échappant de celui-ci en direction dudit mélangeur, ladite unité de commande (104) permettant de commander chacun des moyens (4, 6) de distribution de poudre ;
- un collecteur de mélange de poudres (56) placé sous ledit mélangeur (30) et communiquant avec ce dernier ; et
- un distributeur de mélange de poudres (60) placé sous ledit collecteur de mélange de poudres (56) et communiquant avec ce dernier,
ledit organe de mélange (32) monté à rotation présentant une première surface d'impact des poudres (40) de forme générale conique d'axe (2) correspondant à l'axe de rotation de cet organe.

2. Installation selon la revendication 1, **caractérisée en ce que** ledit mélangeur (30) comporte une seconde surface d'impact des poudres (42) de forme générale conique, agencée coaxialement et en regard de ladite première surface d'impact des poudres (40), afin de former entre celles-ci un interstice (44) de passage des poudres, de forme générale conique.

3. Installation selon la revendication 1 ou la revendication 2, **caractérisée en ce que** ladite première surface d'impact des poudres (40) de forme générale conique présente un ou plusieurs décrochements (46).

4. Installation selon l'une quelconque des revendications précédentes, **caractérisée en ce que** ledit organe de mélange (32) est monté à rotation sur une pièce de guidage du mélangeur (52), équipée d'un ou plusieurs orifices de passage (54) communiquant avec ledit collecteur de mélange de poudres (56) au-dessus duquel ils se trouvent.

5. Installation selon revendication 4, **caractérisée en ce qu'**en tout point de la surface de délimitation de chaque orifice de passage (54), cette surface de délimitation forme un angle inférieur à 40° avec la verticale, et de préférence inférieur à 30°.

6. Installation selon l'une quelconque des revendications précédentes, **caractérisée en ce qu'**en tout point de la surface de délimitation (58) dudit collecteur de mélange de poudres (56), cette surface de délimitation forme un angle inférieur à 40° avec la verticale, et de préférence inférieur à 30°.

7. Installation selon l'une quelconque des revendications précédentes, **caractérisée en ce que** le dispositif (1) comporte de plus un collecteur (26) des poudres (A1,..,An) placé sous lesdits moyens de distribution (4, 6), entre ces derniers et ledit mélangeur (30).

8. Installation selon revendication 7, **caractérisée en ce qu'**en tout point de la surface de délimitation (28) dudit collecteur (26) des poudres (A1,..,An), cette surface de délimitation (28) forme un angle inférieur à 40° avec la verticale, et de préférence inférieur à 30°.

9. Installation selon l'une quelconque des revendications précédentes, **caractérisée en ce que** chacun desdits moyens de distribution (4, 6) prend la forme d'un dispositif d'acheminement de poudre par vibrations d'un élément support de poudre (14).

10. Installation selon l'une quelconque des revendications précédentes, **caractérisée en ce que** ladite unité de commande (104) prend en compte, pour commander chacun desdits moyens de distribution (4, 6) sur une période T :
- l'évolution des proportions de masse des poudres (A1,..,An) au sein d'un mélange de poudres à déposer, sur ladite période T ;
- des valeurs représentatives de la masse volumique du mélange de poudres après dépôt, en fonction des proportions de masse des poudres (A1,..,An) dans ce mélange ; et
- le temps de latence (tl) associé au dispositif de dépôt, correspondant au temps s'écoulant entre l'instant où des commandes sont transmises aux moyens de distribution de poudre afin d'obtenir un mélange de poudres ayant des proportions de masse données, et l'instant auquel ce mélange de poudres est déposé.

11. Installation selon l'une quelconque des revendications précédentes, **caractérisée en ce que** ladite unité de commande (104) prend en compte, pour commander lesdits moyens de mise en mouvement (102) du dispositif de dépôt, sur une période T, l'évolution de la position (x,y) à adopter pour le distributeur (60) de mélange de poudres, sur la période T.

12. Procédé de fabrication d'un objet à gradients de composition à l'aide d'une installation (100) selon l'une quelconque des revendications précédentes, dans lequel l'objet à gradients de composition est réalisé à partir de la formation d'au moins une couche de mélange de poudres (114) déposée sur un support (108), par mise en mouvement dudit distributeur (60) de mélange de poudres par rapport audit support (108).

13. Procédé selon la revendication 12, **caractérisé en ce que** pour la réalisation de ladite couche de mélange de poudres (114), ledit distributeur (60) de mélange de poudres est mis en mouvement de manière à réaliser un balayage de la surface du support (108) sur lequel ladite couche doit être déposée, la commande d'au moins l'un des moyens de distribution (4, 6) variant durant ledit balayage.

## Patentansprüche

1. Einrichtung (100) zur Abscheidung einer Pulvermischung zur Bildung eines Objekts mit Zusammensetzungsgradienten, welche ein Gerät (1) zur Abscheidung einer Pulvermischung aufweist, welches auf Bewegungsmitteln im Raum (102) montiert ist, wobei die besagte Einrichtung eine Steuereinheit (104) aufweist, welche die Steuerung der besagten Bewegungsmittel (102) erlaubt,
**dadurch gekennzeichnet, dass** das Gerät (1) die folgenden Bauteile umfasst:
- eine Vielzahl von Behältern (R1,...,Rn), welche jeweils zum Fassen der unterschiedlichen Pulver (A1,...,An) bestimmt sind;
- eine Pulver-Mischmaschine (30), welche unter den besagten Behältern (R1,...,Rn) angebracht ist, wobei die besagte Mischmaschine ein Mischorgan (32) aufweist, welches drehbar montiert ist und dazu bestimmt ist, von den aus den Behältern stammenden Pulvern (A1 ,...,An) beaufschlagt zu werden;
eine Vielzahl von Mitteln (4, 6) zur Verteilung des Pulvers, welche jeweils mit den Behältern (R1,...,Rn) zusammenwirken, und wobei jedes konzipiert ist, um den Massenstrom des Pulvers, welcher aus diesem in Richtung der Mischmaschine austritt, zu regulieren, wobei die besagte Steuereinheit (104) die Steuerung jedes der Pulververteilungs-Mittel (4, 6) erlaubt;
- einen Pulvermischungs-Sammler (56), welcher unter der besagten Mischmaschine (30) angebracht ist und mit letzterer kommuniziert; und
- einen Pulvermischungs-Verteiler (60), welcher unter dem besagten Pulvermischungs-Sammler (56) angebracht ist und mit letzterem kommuniziert,
wobei das besagte drehbar montierte Mischorgan (32) eine erste Pulver-Beaufschlagungs- bzw. Aufprallfläche (40) mit allgemein konischer Form aufweist, deren Achse (2) der Rotationsachse des Mischorgans entspricht.

2. Einrichtung nach Anspruch 1, **dadurch gekennzeichnet, dass** die besagte Mischmaschine (30) eine zweite Pulver-Beaufschlagungs- bzw. Aufprallfläche (42) mit allgemein konischer Form aufweist, welche koaxial und gegenüber der besagten ersten Pulver-Beaufschlagungs- bzw. Aufprallfläche (40) angeordnet ist, um einen Pulver-Durchgangsspalt (44) mit allgemein konischer Form zwischen sich zu bilden.

3. Einrichtung nach Anspruch 1 oder Anspruch 2, **dadurch gekennzeichnet, dass** die besagte erste Pulver-Beaufschlagungs- bzw. Aufprallfläche (40) mit alllgemein konischer Form eine oder mehrere Abweichungen (46) aufweist.

4. Einrichtung nach einem der vorherigen Ansprüche, **dadurch gekennzeichnet, dass** das besagte Mischorgan (32) drehbar auf einem Führungselement (52) der Mischmaschine montiert ist, welches mit einer oder mehreren Durchtrittsöffnungen (54) ausgestattet ist, welche mit dem besagten Pulvermischungs-Sammler (56), oberhalb welchem sie vorzufinden sind, kommunizieren.

5. Einrichtung nach Anspruch 4, **dadurch gekennzeichnet, dass** an allen Stellen der Begrenzungfläche einer jeden Durchtrittsöffnung (54) diese Begrenzungsfläche einen Winkel von weniger als 40° mit der Vertikalen bildet, und vorzugsweise von weniger als 30°.

6. Einrichtung nach einem der vorhergehenden Ansprüche, **dadurch gekennzeichnet, dass** an allen Stellen der Begrenzungsfläche (58) des Pulvermischungs-Sammlers (56) diese Begrenzungsfläche einen Winkel von weniger als 40° mit der Vertikalen bildet, und vorzugsweise von weniger als 30°.

7. Einrichtung nach einem der vorhergehenden Ansprüche, **dadurch gekennzeichnet, dass** das Gerät (1) außerdem einen Sammler (26) für die Pulver (A1,...,An) aufweist, welcher unter den besagten Mitteln zur Verteilung (4, 6) zwischen diesen und der besagteb Mischmaschine (30) angebracht ist.

8. Einrichtung nach Anspruch 7, **dadurch gekennzeichnet, dass** die Begrenzungsfläche (28) an allen Stellen der Begrenzungsfläche (28) des Sammlers (26) für die Pulver (A1,...,An) einen Winkel von weniger als 40° mit der Vertikalen bildet, und vorzugsweise von weniger als 30°.

9. Einrichtung nach einem der vorhergehenden Ansprüche, **dadurch gekennzeichnet, dass** jedes der Mittel zur Verteilung (4, 6) die Gestalt eines Pulver-Beförderungs- oder Transportgeräts durch Vibration eines Pulver-Trägerelements (14) annimmt.

10. Einrichtung nach einem der vorhergehenden Ansprüche, **dadurch gekennzeichnet, dass** die Steuereinheit (104) zur Steuerung eines jeden der Mittel zur Verteilung (4, 6) für eine Zeitdauer T Folgendes berücksichtigt:
- Entwicklung der Massenverhältnisse der Pulver (A1,...,An) innerhalb einer abzuscheidenden Pulvermischung für die Zeitdauer T;
- repräsentative Werte der Dichte der Pulvermischung nach der Abscheidung entsprechend den Massenverhältnissen der Pulver (A1,...,An) in der Mischung; und
- die Latenzzeit (tl), welche mit der Abscheidungsvorrichtung verbunden ist, welche der Zeit entspricht, die zwischen dem Moment, an dem die Befehle an die Mittel zur Verteilung des Pulvers übertragen werden, um eine Pulvermischung mit den vorgegebenen Massenverhältnissen zu erhalten, und dem Moment verstreicht, an dem die Pulvermischung abgeschieden wird.

11. Einrichtung nach einem der vorhergehenden Ansprüche, **dadurch gekennzeichnet, dass** die Steuereinheit (104) zur Steuerung der Mittel zur Bewegung (102) der Abscheidungsvorrichtung für eine Zeitdauer T die Entwicklung der Position (x,y) berücksichtigt, um diese für den Pulvermischungs-Verteiler (60) für die Zeitdauer T zu übernehmen.

12. Verfahren zur Herstellung eines Objekts mit Zusammensetzungsgradienten mittels einer Einrichtung (100) nach einem der vorhergehenden Ansprüche, in welcher das Objekt mit Zusammensetzungsgradienten ab der Bildung wenigstens einer Schicht (114) der Pulvermischung realisiert wird, wobei die Schicht auf einen Träger (108) durch Inbewegungsetzung des besagten Verteilers (60) der Pulvermischung im Verhältnis zu dem Träger (108) abgeschieden wird.

13. Verfahren nach Anspruch 12, **dadurch gekennzeichnet, dass** für die Realisierung der Pulvermischungs-Schicht (114) der besagte Pulvermischungs-Verteiler (60) so in Bewegung gesetzt wird, dass eine Abtastung der Oberfläche des Trägers (108) realisiert wird, auf welcher die Schicht abgeschieden werden soll, wobei sich der Befehl zumindest eines der Mittel zur Verteilung (4, 6) während dieser Abtastung verändert.

## Claims

1. An installation. (100) for depositing a mixture of powders for forming an object with compositions gradients, comprising a device (1) for depositing a mixture of powders mounted on means for initiating spatial movement (102), said installation comprising a control unit (104) with which said movement initiating means (102),
**characterized in that** said device 1 includes the following elements:
- a plurality of tanks (R1,..,Rn) respectively intended to contain different powders (A1,..,An);
- a powder mixer (30) placed under said tanks (R1,..,Rn), said mixer including a rotationally mounted mixing member (32) and intended to be impacted by the powders (A1,..,An) from the tanks;
- a plurality of means (4, 6) for dispensing powder respectively cooperating with the tanks (R1,...,Rn), and each designed in order to regulate the mass flow rate of the powder escaping from the latter towards said mixer, said control unit (104) being able to control each of said means (4, 6) for dispensing powder;
- a powder mixture collector (56) placed under said mixer (30) and communicating with the latter; and
- a powder mixture dispenser (60) placed under said powder mixture collector (56) and communicating with the latter;
said rotatably mounted mixing member (32) having a first surface for impact of the powders (40) of a general conical shape with an axis (2) corresponding to the axis of rotation of this member.

2. The installation according to claim 1, **characterized in that** said mixer (30) includes a second powder impact surface (42) of general conical shape, laid out coaxially and facing said first powder impact surface (40), in order to form between the latter, an interstice (44) for letting through the powders, with a general conical shape.

3. The installation according to claim 1 or claim 2, **characterized in that** said first powder impact surface (40) with a general conical shape has one or more recesses (46).

4. The installation according to any of the preceding claims, **characterized in that** said mixing member (32) is rotatably mounted on a guiding part of the mixer (52), equipped with one or several passage orifices (54) communicating with said powder mixture collector (56) above which they are found.

5. The installation according to claim 4, **characterized in that** in any point of the delimitation surface of each passage orifice (54), this delimitation surface forms an angle of less than 40° with the vertical, and preferably of less than 30°.

6. The installation according to any of the preceding claims, **characterized in that** in any point of the delimitation surface (58) of said powder mixture collector (56), this delimitation surface forms an angle of less than 40° with the vertical and preferably of less than 30°.

7. The installation according to any of the preceding claims, **characterized in that** device (1) further includes a collector (26) of the powders (A1,..,An) placed under said dispensing means (4, 6), between the latter and said mixer (30).

8. The installation according to claim 7, **characterized in that** in any point of the delimitation surface (28) of said collector (26) of the powders (A1,..,An), this delimitation surface (28) forms an angle of less 40° with the vertical, and preferably of less than 30°.

9. The installation according to any of the preceding claims, **characterized in that** each of said dispensing means (4, 6) assumes the form of a device for delivering powder by vibrations of a powder supporting element (14).

10. The installation according to any of the preceding claims, **characterized in that** said control unit (104) takes into account in order to control each of said dispensing means (4, 6) over a period T:
- the time-dependent change in the mass proportions of the powders (A1,..,An) within a mixture of powders to be deposited, over said period T;
- representative values of the specific gravity of the mixtures of powders after the deposition, depending on the mass proportions of the powders (A1,..,An) in this mixture; and
- the latency time (tl) associated with the deposition device, corresponding to the time having elapsed between the instant when controls are transmitted to the powder dispensing means in order to obtain a mixture of powders having given mass proportions, and the instant at which this mixture of powders is deposited.

11. The installation according to any of the preceding claims, **characterized in that** said control unit (104) takes into account, in order to control said means (102) for setting the deposition device into motion, over a period T, the time-dependent change in the position (x,y) to be adopted for the powder mixture dispenser (60), over the period T.

12. A method for making an object with composition gradients with an installation (100) according to any of the preceding claims, wherein the object with composition gradients is made from the formation of at least one powder mixture layer (114) deposited on a support (108), by setting said powder mixture dispenser (60) into motion relatively to said support (108).

13. The method according to claim 12, **characterized in that** for making said powder mixture layer (114), said powder mixture dispenser (60) is set into motion so as to perform a sweep of the surface of the support (108) onto which said layer is to be deposited, the control of at least one of the dispensing means (4, 6) varying during said sweep.
